(19) Europäisches Patentamt

European Patent Office

Office européen des brevets

(11) **EP 1 358 717 B1**

(12) **EUROPÄISCHE PATENTSCHRIFT**

(45) Veröffentlichungstag und Bekanntmachung des Hinweises auf die Patenterteilung:
**27.04.2005   Patentblatt 2005/17**

(21) Anmeldenummer: 02706666.1

(22) Anmeldetag: **04.02.2002**

(51) Int Cl.⁷: $H04B\ 1/707$, $H04B\ 17/00$

(86) Internationale Anmeldenummer:
**PCT/DE2002/000406**

(87) Internationale Veröffentlichungsnummer:
**WO 2002/063793 (15.08.2002 Gazette 2002/33)**

(54) **Verfahren zur Bestimmung der Störleistung in einem CDMA-Funkempfänger**

Method for determining the interference power in a CDMA radio receiver

Procede de determination de la puissance de bruit dans un recepteur radio AMRC

(84) Benannte Vertragsstaaten:
**AT BE CH CY DE DK ES FI FR GB GR IE IT LI LU MC NL PT SE TR**

(30) Priorität: **08.02.2001   DE 10105733**

(43) Veröffentlichungstag der Anmeldung:
**05.11.2003   Patentblatt 2003/45**

(73) Patentinhaber: **Infineon Technologies AG**
**81669 München (DE)**

(72) Erfinder:
• **GRYSKA, Holger**
**81737 München (DE)**

• **YANG, Bin**
**70550 Stuttgart (DE)**

(74) Vertreter: **Lange, Thomas, Dr. et al**
**Patentanwälte**
**Lambsdorff & Lange**
**Dingolfinger Strasse 6**
**81673 München (DE)**

(56) Entgegenhaltungen:
**EP-A- 0 776 105**          **US-A- 5 930 288**

**Beschreibung**

Die Erfindung betrifft ein Verfahren zur Bestimmung der Störleistung in einem CDMA-Funkempfänger sowie einen CDMA-Funkempfänger mit einem Mittel zum Bestimmen der Störleistung.

Das Mobilfunknetz der dritten Generation, UMTS (Universal Mobile Telecommunications System), basiert auf dem Modulationsverfahren W-CDMA (Wideband-Code Division Multiple Access). Bei W-CDMA können alle zu übertragenden Kanäle bzw. Teilnehmersignale den gesamten zur Verfügung stehenden Frequenzbereich nutzen. Die für den Vielfachzugriff erforderliche Trennung der verschiedenen Kanäle erfolgt durch Codemultiplex. Dabei wird jedem Kanal (genauer: jedem Symbol eines Kanals) eine kanalspezifische orthogonale Codesequenz aufmoduliert, mit deren Hilfe der Empfänger den gewünschten Kanal (bzw. jedes einzelne Symbol dieses Kanals) aus der Gesamtheit aller übertragenen Kanäle separieren kann. Anschaulich gesprochen stellt die Codesequenz einen Fingerabdruck dar, der jedem Symbol aufgeprägt wird und dieses von Symbolen anderer Kanäle unterscheidbar macht.

Durch die nicht idealen Eigenschaften der verwendeten Spreizcodes stören sich die einzelnen Kanäle gegenseitig. Hinzu kommt, daß jeder Kanal einer Mehrwegeausbreitung unterliegt, was zur Folge hat, daß zu einem ausgesendeten Signal mehrere Empfangssignalversionen mit unterschiedlichen Leistungen und unterschiedlichen Zeitverzögerungen am Empfänger eintreffen. Damit ein CDMA-System überhaupt funktionieren und eine optimale Nutzung des zur Verfügung stehenden Frequenzbereichs erreicht werden kann, ist es deshalb von grundlegender Bedeutung, daß die Störleistung jedes einzelnen Kanals im Empfänger idealerweise gleich groß ist. Ansonsten kann es passieren, daß ein Kanal mit vergleichsweise großer Störleistung die anderen Kanäle überdeckt und deren Detektion unmöglich macht. Aus diesem Grund sieht jedes CDMA-System eine Leistungsregelung vor.

Die Leistungsregelung eines CDMA-Systems basiert darauf, daß für alle detektierten Kanäle im Empfänger das Verhältnis der Nutzleistung zur Störleistung (SINR: Signal-to-Interferenceplus-Noise Ratio) gemessen wird. Diesen gemessenen Wert sendet der Empfänger dann in Form eines Sendeleistungssteuerungsbefehls (TCP) auf dem Rückkanal zurück zum Sender. Der Sender paßt daraufhin die Sendeleistung für jeden Kanal individuell an, um für alle Kanäle ein einheitliches SINR im Empfänger zu erreichen. Ein günstiger Nebeneffekt ist dabei, daß diese Leistungsregelung Schwankungen beim physikalischen Mobilfunkkanal (Slow Fading) in gewissen Grenzen kompensieren und damit die Übertragungskapazität erhöhen kann. Es wird deutlich, daß die Leistungsregelung in einem CDMA-System eine Schlüsselstellung inne hat, welche die Gesamtperformance des Systems entscheidend beeinflußt.

Die Leistungsregelung an sich wird von dem jeweiligen Standard vorgegeben. Die Regelgröße ist das SINR, das Verhältnis der Nutzleistung zur Störleistung eines detektierten Kanals. Die Messung der Nutzleistung ist verhältnismäßig einfach. Wesentlich schwieriger hingegen gestaltet sich die Messung der Störleistung, welche die Meßgenauigkeit des SINR allerdings maßgeblich beeinflußt, da sie im Nenner des Nutzleistung-zu-Störleistungsverhältnisses steht.

Der UMTS-Standard besagt, daß die Störleistung aus den dem Empfänger a-priori bekannten Pilotsymbolen nach der Entspreizung des empfangenen Signals zu ermitteln ist. Die dabei auftretende Schwierigkeit besteht darin, daß in den dedizierten Kanälen häufig nicht ausreichend Pilotsymbole für eine genaue Messung der Störleistung zur Verfügung stehen. Bei UMTS können beispielsweise je nach gewählter Zeitschlitzstruktur lediglich zwei Pilotsymbole pro Zeitschlitz für die Störleistungsmessung vorhanden sein. Da die ebenfalls mit einem Meßfehler behaftete Kanalschätzung in die Störleistungsmessung mit eingeht, äußerst sich der Schätzfehler bei der Auswertung von nur wenigen Pilotsymbolen in einer signifikanten Leistungseinbuße des gesamten CDMA-Systems.

Die Genauigkeit der Störleistungsermittlung kann dadurch erhöht werden, daß möglichst viele bekannte Symbole für die Messung herangezogen werden. Ferner können Mittelungsverfahren zur Reduktion des Meßfehlers eingesetzt werden. Beide Maßnahmen weisen jedoch den Nachteil auf, daß sie die Zeitkonstante der Regelung erhöhen und damit die Fähigkeit des Systems, Leistungsschwankungen bei der Signalübertragung zu kompensieren, beeinträchtigen können.

EP-A-863 618 offenbart ein Verfahren zur Bestimmung der Störleistung in einem CDMA- Funkempfänger.

Der Erfindung liegt die Aufgabe zugrunde, ein Verfahren zur Bestimmung der Störleistung in einem CDMA-Funkempfänger anzugeben, welches eine hohe Genauigkeit aufweist. Ferner zielt die Erfindung darauf ab, einen CDMA-Funkempfänger anzugeben, welcher ausgelegt ist, die Störleistung eines entspreizten empfangenen Signals mit einer hohen Genauigkeit zu messen.

Die der Erfindung zugrunde liegende Aufgabenstellung wird durch die Merkmale der unabhängigen Ansprüche gelöst.

Demnach sieht das erfindungsgemäße Verfahren vor, neben den in dem Empfänger a-priori bekannten Symbolen auch im Empfänger a-priori unbekannte Symbole des empfangenen Signals zur Bestimmung der Störleistung zu nutzen. Die detektierten Symbole werden dann hinter dem Empfänger entschieden und für die Störleistungsmessung zurückgekoppelt. Obgleich davon auszugehen ist, daß ein gewisser Teil der detektierten Datensymbole fehlerhaft entschieden werden, kann dennoch aufgrund der erheblichen Erhöhung der Anzahl von Symbolen, die für die Berechnung der Störleistung herangezogen werden, eine deutliche Verbesserung der Genauigkeit bei der Bestimmung der Störleistung erreicht werden.

Eine erste vorteilhafte Maßnahme des erfindungsgemäßen Verfahrens kennzeichnet sich dadurch, daß die Störleistung im Signalpfad hinter dem Empfänger ermittelt wird. Bei dieser Vorgehensweise können beliebige Empfänger zum Einsatz kommen. Eine alternative Vorgehensweise, die einen RAKE-Empfänger voraussetzt, besteht darin, daß die Störleistung durch Messen der einzelnen Pfad-Störleistungen jedes RAKE-Fingers vor dem Combiner des RAKE-Empfängers bestimmt und aus den einzelnen gemessenen Pfad-Störleistungen die Störleistung ermittelt wird. Während die erste Vorgehensweise (Ermitteln der Störleistung hinter dem Empfänger) aufwandsgünstiger zu implementieren ist, bietet die zweite Vorgehensweise (Ermittlung der einzelnen pfadbezogenen Störleistungen) eine etwas bessere Genauigkeit.

Eine weitere Verbesserung der Genauigkeit bei der Ermittlung der Störleistung läßt sich dadurch erreichen, daß die Leistung der a-priori bekannten Symbole und die Leistung der a-priori unbekannten Datensymbole ermittelt werden und daß die Störleistung unter Berücksichtigung dieser beiden ermittelten Leistungen berechnet wird. In diesem Fall können Leistungsunterschiede zwischen den a-priori bekannten Symbolen (Pilotsymbolen) und den a-priori unbekannten Datensymbolen bei der Ermittlung der Störleistung berücksichtigt werden. Solche Leistungsunterschiede, die insbesondere in Mehrfachcode-Betriebsweisen gegebenenfalls auftreten können, sind im Empfänger nicht bekannt und müssen daher durch Messung ermittelt werden.

In dem Fall, daß die a-priori bekannten und die a-priori unbekannten Symbole die Pilot- und die Nutzdatensymbole eines einzigen Kanals, insbesondere des dedizierten DPCH-Kanals gemäß UMTS-Standard, sind, kennzeichnet sich eine weitere vorteilhafte Maßnahme des erfindungsgemäßen Verfahrens dadurch, daß zusätzlich zu diesen Symbolen weitere Symbole eines oder mehrerer weiterer Kanäle zur Ermittlung der Störleistung herangezogen werden. Zum Beispiel kann es sich bei dem weiteren Kanal um den gemeinsamen Pilotkanal der Abwärtsstrecke handeln.

Weitere vorteilhafte Aspekte der Erfindung sind in den Unteransprüchen angegeben.

Die Erfindung wird nachfolgend anhand von zwei Ausführungsbeispielen unter Bezugnahme auf die Zeichnung beschrieben; in dieser zeigt:

Fig. 1  eine schematische Darstellung der UMTS-Kanalstruktur der Abwärtsstrecke; und

Fig. 2  ein Blockschaltbild eines Basisbandabschnitts eines erfindungsgemäßen CDMA-Funkempfängers.

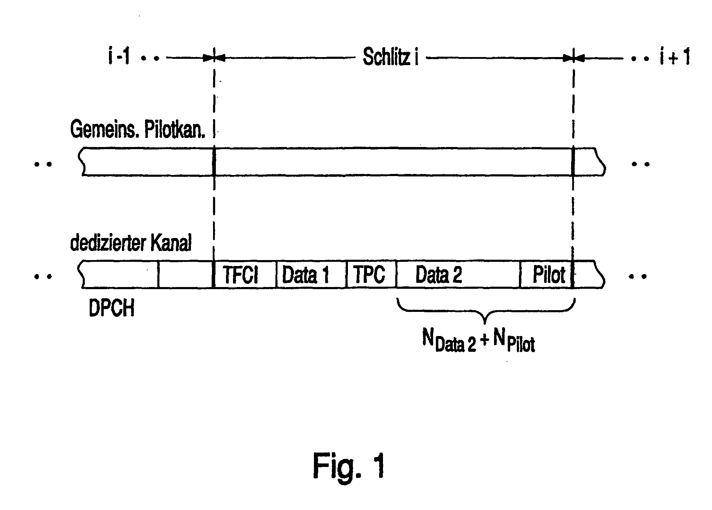

Fig. 1 zeigt eine schematische Darstellung des gemeinsamen Pilotkanals und des gemultiplexten dedizierten Kanals DPCH (Dedicated Physical Channel) auf der Abwärtsstrecke. Die horizontale Erstreckung entspricht der Zeitachse.

Der dedizierte Kanal DPCH setzt sich aus zwei multiplexierten dedizierten Kanälen DPDCH (Dedicated Physical Data Channel) und DPCCH (Dedicated Physical Control Channel) zusammen. Der DPCCH-Kanal umfaßt Abschnitte von Pilotsymbolen Pilot und von Steuerinformationen TPC und TFCI. Der DPDCH-Kanal enthält Nutzdaten, welche in den Anschnitten Data1 und Data2 enthalten sind. Die für einen Zeitschlitz i dargestellte Datenstruktur wiederholt sich in jedem der vorhergehenden beziehungsweise folgenden Zeitschlitze i-1 bzw. i+1.

UMTS verwendet auf der Abwärtsstrecke drei gemeinsame physikalische Kanäle, von denen einer (der erste CCPCH-(Common Control Physical Channel)-Kanal) einen gemeinsamen Pilotkanal umfasst. Dieser gemeinsame Pilotkanal ist in Fig. 1 dargestellt und für alle Mobilstationen verfügbar.

Für Pilotsymbole ist charakteristisch, daß sie im Empfänger a-priori bekannt sind. Genauer sind die in dem gemeinsamen Pilotkanal gesendeten Pilotsymbole in jeder Mobilstation im Funkbereich der sendenden Basisstation bekannt, während die in dem dedizierten Kanal übertragenen Pilotsymbole in demjenigen Empfänger bekannt sind, für welchen sie gemäß CDMA-Kodierung bestimmt sind.

Das Signal-zu-Rauschverhältnis SINR, in der Literatur vielfach auch als SIR bezeichnet, ist durch die Gleichung

$$SINR = \frac{P_{RSCP}}{P_{ISCP}} \qquad (1)$$

bestimmt. $P_{RSCP}$ (RSCP: Received Signal Code Power) bezeichnet dabei die Nutzleistung und $P_{ISCP}$ (ISCP: Interference Signal Code Power) bezeichnet die Störleistung des detektierten Kanals bezogen auf einen Chip.

Nach einem ersten Ausführungsbeispiel der Erfindung wird die auf einen Chip bezogene Störleistung des detektierten Kanals $P_{ISCP}$ nach der folgenden Gleichung ermittelt:

$$P_{ISCP} = R \cdot \left( \sum_{k=1}^{N_{Data2}} \left| d \cdot r_k - P_a \cdot p_{Data2,k} \right|^2 + \sum_{k=N_{Data2}+1}^{N_{Data2}+N_{Pilot}} \left| r_k - P_a \cdot p_{Pilot,k} \right|^2 \right)$$

mit

$$R = \frac{1}{N_{Data2} + N_{Pilot} - 1} \tag{2}$$

Dabei bezeichnen $N_{Pilot}$ die Anzahl der in einem Zeitschlitz in dem Abschnitt Pilot zur Verfügung stehenden Pilotsymbole $p_{Pilot,k}$ und $N_{Data2}$ die Anzahl der zurückgekoppelten, entschiedenen Datensymbole $p_{Data2,k}$. Diese können sämtliche oder auch nur einen Teil der in dem Abschnitt Data2 enthaltenen Datensymbole umfassen. Mit $r_k$ sind die empfangenen Symbole am Empfängerausgang bezeichnet und $P_a$ ist die Leistung der von der Kanalschätzung ermittelten Kanalimpulsantwort.

Die Größe d bezeichnet einen Faktor, der einem möglichen Unterschied der Sendeleistung zwischen den Pilot- und den Datensymbolen Rechnung trägt. Da solche Leistungsunterschiede im Empfänger a-priori nicht bekannt sind, sieht die Erfindung vor, die Größe d gemäß der folgenden Beziehung

$$d = \sqrt{\frac{P_{RSCP, Pilot}}{P_{RSC, Data2}}} \tag{3}$$

zu schätzen. Dabei bezeichnet $P_{RSCP,Pilot}$ die Signalleistung der Pilotsymbole des dedizierten Kanals DPCH und $P_{RSCP,Data2}$ bezeichnet die Signalleistung der Datensymbole aus dem Abschnitt Data2 des dedizierten Kanals.

Es wird darauf hingewiesen, daß die Genauigkeit der Schätzung von $P_{ISCP}$ einerseits abhängig ist von der Güte der Kanalschätzung und andererseits durch die Anzahl $N_{Data2}+N_{Pilot}$ beeinflußt wird. Je größer diese Anzahl der insgesamt für die Ermittlung der Störleistung berücksichtigten Symbole, desto besser die Schätzgenauigkeit bei der Ermittlung von $P_{ISCP}$.

Ein zweites Ausführungsbeispiel des erfindungsgemäßen Verfahrens betrifft die Ermittlung der Störleistung speziell bei einem RAKE-Empfänger. Wie bereits erwähnt, unterliegen Funksignale im Mobilfunk der Mehrwege-Ausbreitung, d.h. durch Reflexion, Streuung und Beugung des gesendeten Funksignals an diversen Hindernissen im Ausbreitungsweg treten am Empfänger mehrere Signal-Empfangsversionen auf, die zeitlich zueinander verschoben und unterschiedlich abgeschwächt sind. Das Funktionsprinzip des RAKE-Empfängers beruht darauf, mehrere dieser Empfangssignal-Versionen zunächst getrennt auszuwerten und dann zur Erzielung eines möglichst hohen Detektionsgewinns zeitrichtig zu überlagern. Die Bezeichnung RAKE ("Harke") beschreibt dabei in bildhafter Weise die Struktur eines solchen Empfängers, wobei die Zinken der Harke die RAKE-Finger repräsentieren und der Stiel der Harke das ausgangsseitig bereitgestellte, überlagerte Empfangssignal darstellt.

Die Störleistung $P_{ISCP,j}$ im j-ten RAKE-Finger (bezogen auf einen Chip) wird gemäß dem zweiten Ausführungsbeispiel der Erfindung gemäß der folgenden Beziehung ermittelt

$$P_{ISCP,j} = R \cdot \left( \sum_{k=1}^{N_{Data2}} \left| d \cdot x_{k,j} - a_j \cdot p_{Data2,k} \right|^2 + \sum_{k=N_{Data2}+1}^{N_{Data2}+N_{Pilot}} \left| x_{k,j} - a_j \cdot p_{Pilot,k} \right|^2 \right)$$

$$R = \frac{1}{N_{Data2} + N_{Pilot} - 1} \tag{4}$$

Dabei bezeichnen $N_{Pilot}$ wiederum die Anzahl der in einem Zeitschlitz zur Verfügung stehenden Pilotsymbole $P_{Pilot,k}$ und $N_{Data2}$ die Anzahl der zurückgekoppelten, entschiedenen Datensymbole $p_{Data2,k}$. Mit $x_{k,j}$ sind die jeweils empfangenen Symbole am Ausgang des RAKE-Fingers j (das heißt nach der Synchronisierung und Entspreizung und vor der Zusammenführung der Empfangssignal-Versionen im Combiner) bezeichnet und d wird, sofern erforderlich, wiederum nach der Gleichung (3) berechnet. Mit $a_j$ werden die von der Kanalschätzung ermittelten komplexen Pfadgewichte für jeden der betrachteten Empfangspfade bezeichnet. Es gilt

$$P_a = \sum_{j=1}^{N_{Finger}} |a_j|^2 .$$

Die im Signalweg hinter den einzelnen RAKE-Finger j gemessenen pfadindividuellen Störleistungen $P_{ISCP,j}$ werden anschließend gemäß der zugrundeliegenden Combiner-Regel zur (gesamten) Störleistung $P_{ISCP}$ des betrachteten Kanals kombiniert:

$$P_{ISCP} = \sum_{j=1}^{N_{Finger}} \left( |a_j|^2 \cdot P_{ISCP,j} \right) \qquad (5)$$

$N_{Finger}$ ist die Anzahl der aktiven Finger des RAKE-Empfängers. Die kanalbezogene Störleistung $P_{ISCP}$ ergibt sich also aus den pfadbezogenen Störleistungen $P_{ISCP,j}$ durch Wichtung letzterer mittels der Betragsquadrate der bei der Kanalschätzung ermittelten komplexen Pfadgewichte und anschließender Summation über sämtliche aktiven RAKE-Finger (das heißt Pfade).

Eine weitere Verbesserung der Störleistungsermittlung kann dadurch erreicht werden, daß Störleistungsmessungen in einem oder mehreren weiteren Kanälen für die Berechnung von $P_{ISCP}$ berücksichtigt werden. Dem liegt zugrunde, daß $P_{ISCP}$ nur von der am Empfänger eingehenden Leistung $P_{RSSI}$ aller Kanäle, nicht jedoch von der Sendeleistung des betrachteten Kanals abhängig ist.

$P_{RSSI}$ hängt stark von der Zeitschlitzstruktur und der Leistung jedes übertragenen physikalischen Kanals ab. Sofern eine große Anzahl von physikalischen Kanälen einander überlagert sind, wird die Varianz von $P_{RSSI}$ kleiner und der Mittelwert der Gesamtsignalstärke während eines Zeitschlitzes stellt eine gute Schätzung für $P_{RSSI}$ dar. Die Unabhängigkeit von $P_{ISCP}$ von $P_{RSCP}$ bedeutet, daß es möglich ist, die geschätzten Störleistungen $P_{ISCP}(n)$ für unterschiedliche physikalische Kanäle n zu kombinieren

$$P_{ISCP} = \sum_{n}^{Kanäle} \left( w_n \cdot P_{ISCP}(n) \right) \qquad (6)$$

Die Größe $w_n$ bezeichnet dabei einen Gewichtsfaktor, der die Schätzqualität in den unterschiedlichen Kanälen berücksichtigt, d.h. beispielsweise von der Anzahl der Symbole abhängt, die in den einzelnen Kanälen zur Schätzung von $P_{ISCP}(n)$ herangezogen werden.

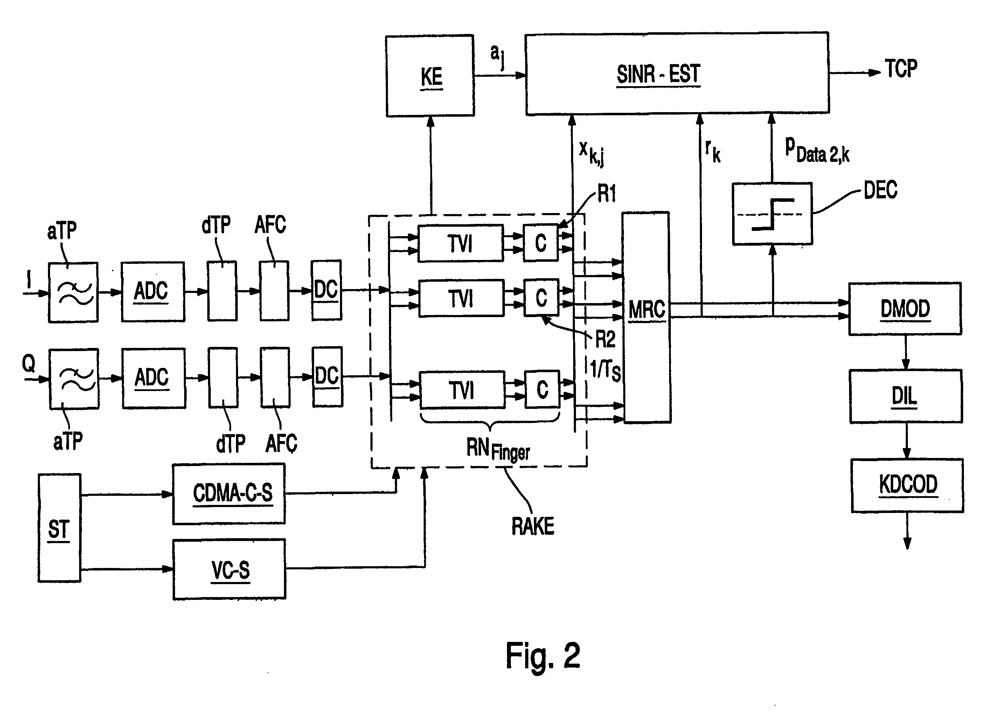

Fig. 2 zeigt ein Blockschaltbild eines Basisbandabschnittes eines erfindungsgemäßen RAKE-Empfängers.

Am Eingang des Basisbandabschnitts steht eine analoge Inphase(I)-Signalkomponente und eine analoge Quadratur(Q)-Signalkomponente des empfangenen Datensignals bereit.

Die analogen I- und Q-Signalkomponenten durchlaufen jeweils ein analoges Tiefpassfilter aTP und werden anschließend in Analog-Digital-Umsetzern ADC digitalisiert. Die Digitalisierung erfolgt üblicherweise in Überabtastung bezogen auf die Chiprate. Am Ausgang der Analog-Digital-Umsetzer ADC stehen die digitalisierten I- und Q-Datensignalkomponenten zur Verfügung.

Die von den Analog-Digital-Umsetzern ADC ausgegebenen I- bzw. Q-Digitalsignale werden digitalen Tiefpassfilter dTP zugeleitet. Im Signalweg hinter den digitalen Tiefpassfilter dTP können jeweils Frequenzkorrektur-Einheiten AFC angeordnet sein, welche eine automatische Frequenzkorrektur der erhaltenen Digitalsignale vornehmen. Durch die Frequenzkorrektur können z.B. temperaturabhängige Frequenzdrifts des (nicht dargestellten) lokalen Oszillators der Empfangsschaltung kompensiert werden.

In den Signalwegen hinter den Frequenzkorrektur-Einheiten AFC kann sich eine Signalraten-Reduzierstufen DC befinden, die die Signalrate in dem I- und Q-Zweig reduziert.

Die I- und Q-Digitalsignale mit reduzierter Signalrate werden einem RAKE-Empfängerabschnitt RAKE des CDMA-Funkempfängers zugeführt. Der RAKE-Empfängerabschnitt RAKE ist in Fig. 2 von einer gestrichelten Linie begrenzt.

Der RAKE-Empfängerabschnitt RAKE umfasst $N_{Finger}$ parallel liegende RAKE-Finger R1,R2,..,$RN_{Finger}$. Jeder RAKE-Finger R1,R2,..,$RN_{Finger}$ ist im dargestellten Beispiele zweikanalig (für den I- und Q-Zweig) ausgelegt, was durch Doppelpfeile in den Signalwegen angedeutet wird.

Jeder RAKE-Finger R1,R2,..,$RN_{Finger}$ umfaßt eingangsseitig einen zeitvarianten Interpolator TVI (Time Variant Interpolator) und ausgangsseitig einen Korrelator C.

Die Ausgänge der RAKE-Finger R1,R2,..,$RN_{Finger}$ werden einer MRC (Maximum Rational Combining)-Einheit MRC zugeführt, die die I/Q-Ausgänge zu einem Gesamtdatensignal kombiniert. Am Ausgang der MRC-Einheit MRC steht ein RAKE-Gesamtempfangssignal zur Verfügung, das in einem Demodulator DMOD demoduliert wird. Sofern sendeseitig eine Verschachtelung durchgeführt wurde, wird das demodulierte RAKE-Gesamtempfangssignal in einem Entschachteler DIL entschachtelt. Anschließend wird in einem Kanaldekodierer KDCOD eine Kanaldekodierung durchgeführt.

Der CDMA-Funkempfänger umfaßt ferner einen CDMA-Code-Speicher CDMA-C-S und einen Verwürfelungscode-Speicher VC-S. Der CDMA-Code-Speicher CDMA-C-S kann eine Mehrzahl von CDMA-Codes speichern, und der Verwürfelungscode-Speicher VC-S kann mehrere Verwürfelungscodes speichern. Jeder Verwürfelungscode ist eine Kennung für eine bestimmte Basisstation.

Mittel einer Steuereinheit ST kann ein bestimmter CDMA-Code aus dem CDMA-Code-Speicher CDMA-C-S und ein bestimmter Verwürfelungscode aus dem Verwürfelungscode-Speicher VC-S ausgewählt und in den RAKE-Empfängerabschnitt RAKE geladen werden. Die beiden Codes werden in den Korrelatoren C zur Entspreizung und Dechannelization der Signalen in den jeweiligen RAKE-Fingern R1,R2,..,$RN_{Finger}$ verwendet. Zuvor sind die Signale in den RAKE-Fingern R1,R2,..,$RN_{Finger}$ mittels der zeitvarianten Interpolatoren TVI chipgenau miteinander synchronisiert worden.

Zur erfindungsgemäßen Ermittlung der Störleistung $P_{ISCP}$ umfaßt der Empfänger einen SINR-Schätzer SINR-EST. Dem SINR-Schätzer SINR-EST werden einerseits die komplexen Pfadgewichte $a_j$ zugeführt, die von einem Kanalschätzer KE für jeden Pfad beziehungsweise Finger R1,R2,..,$RN_{Finger}$ des RAKE-Empfangsabschnitts RAKE ermittelt wurden. Andererseits steht ein Eingang des SINR-Schätzers SINR-EST mit einem Ausgang eines Schwellenwert-Entscheiders DEC in Verbindung. Der Eingang des Schwellenwert-Entscheiders DEC ist mit dem Ausgang der MRC-Einheit verbunden. Der Schwellenwert-Entscheider DEC ermittelt durch eine harte Entscheidung aus jedem von dem Empfänger ausgegebenen Datenwert ein Datensymbol $p_{Data2,k}$ des Wertebereichs z.B. [±1 ±j]. Diese detektierten, hart entschiedenen Datensymbole werden für die Störleistungsmessung zurückgekoppelt, d.h. gemäß Gleichung (2) oder Gleichung (4) zur Berechnung der Störleistung $P_{ISCP}$ herangezogen. Die Bestimmung der Störleistung $P_{ISCP}$ beruht dabei auf dem Vergleich des empfangenen Symbols (entweder $r_k$ oder $x_{k,j}$) mit dem aufgrund des geschätzten Kanals erwarteten gesendeten Symbol (Pilotsymbol bzw. entschiedenes Datensymbol).

In dem SINR-Schätzer SINR-EST wird dann gemäß Gleichung 1 das Signal-zu-Rauschverhältnis SINR berechnet. Basierend auf dem SINR-Wert wird ein Leistungssteuerungsbefehl TCP erzeugt, welcher an die Basisstation gesendet und dort zur Steuerung der Sendeleistung verwendet wird.

Es wird darauf hingewiesen, daß das erfindungsgemäße Verfahren universell, d.h. sowohl für die Abwärtsstrecke als auch für die Aufwärtsstrecke, einsetzbar ist.

**Patentansprüche**

1. Verfahren zur Bestimmung der Störleistung in einem CDMA-Funkempfänger, wobei nach der Entspreizung eines empfangenen Signals der Schritt ausgeführt wird:

   - Ermitteln der Störleistung ($P_{ISCP}$) des entspreizten Signals aus einem Vergleich von empfangenen Symbolen ($x_{k,j}$; $r_k$) mit dem Empfänger a-priori bekannten Symbolen ($p_{Pilot,k}$) und mit dem Empfänger a-priori unbekannten, empfangenen und entschiedenen Datensymbolen ($p_{Data2,k}$).

2. Verfahren nach Anspruch 1,
   **dadurch gekennzeichnet,**

   - **daß** die Störleistung im Signalpfad hinter dem Empfänger (RAKE, MRC), insbesondere RAKE-Empfänger, ermittelt wird.

3. Verfahren nach Anspruch 1,
   **dadurch gekennzeichnet,**

- **daß** der Empfänger ein RAKE-Empfänger (RAKE, MRC) mit einer Mehrzahl von RAKE-Fingern (R1,.., RN$_{Finger}$) und einem den RAKE-Fingern nachgeschalteten Combiner (MRC) ist, und
- **daß** die Störleistung durch Messen der einzelnen Pfad-Störleistungen (P$_{ISCP,j}$) jedes RAKE-Fingers (R1,.., RN$_{Finger}$) vor dem Combiner (MRC) und Berechnen der Störleistung (P$_{ISCP}$) aus den gemessenen Pfad-Störleistungen ermittelt wird.

4. Verfahren nach einem der vorhergehenden Ansprüche,
   **dadurch gekennzeichnet,**

   - **daß** die Leistung der empfangenen a-priori bekannten Symbole und die Leistung der empfangenen, a-priori unbekannten, entschiedenen Datensymbole ermittelt werden, und
   - **daß** die Störleistung unter Berücksichtigung dieser beiden ermittelten Leistungen berechnet wird.

5. Verfahren nach einem der vorhergehen den Ansprüche,
   **dadurch gekennzeichnet,**

   - **daß** die a-priori bekannten Symbole die Pilotsymbole und die a-priori unbekannten Symbole die Nutzdatensymbole eines einzelnen physikalischen Kanals, insbesondere des dedizierten DPCH-Kanals gemäß UMTS-Standard, sind.

6. Verfahren nach Anspruch 5,
   **dadurch gekennzeichnet,**

   - **daß** zusätzlich zu den a-priori bekannten und a-priori unbekannten Symbolen des einzelnen physikalischen Kanals zur Ermittlung der Störleistung a-priori bekannte und/oder unbekannte Symbole eines oder mehrerer weiterer physikalischer Kanäle, insbesondere eines gemeinsamen Pilotkanals, herangezogen werden.

7. Verfahren nach einem der vorhergehenden Ansprüche,
   **dadurch gekennzeichnet,**

   - **daß** die ermittelte Störleistung zur kanalindividuellen Regelung des Signal-zu-Rauchverhältnisses auf der Abwärtstrecke eingesetzt wird.

8. CDMA-Funkempfänger zum Empfangen eines Signals von spreizcodierten, über einen Übertragungskanal übertragenen Symbolen, mit

   - einer Einheit (C) zum Entspreizen des empfangenen Signals,
   - einem Kanalschätzer (KE) zur Ermittlung von Kanalparametern des Übertragungskanals,
   - einem Empfänger (RAKE, MRC),
   - einem Datensymbol-Entscheider (DEC), der mit einem Ausgang des Empfängers (RAKE, MRC) in Verbindung steht, und
   - einem Mittel (SINR-EST) zum Bestimmen der Störleistung des empfangenen, entspreizten Signals, welchem vom Kanalschätzer (KE) ermittelte Kanalparameter und vom Datensymbol-Entscheider (DEC) entschiedene Datensymbole zugeführt werden, und wobei
   - das Mittel (SINR-EST) zum Bestimmen der Störleistung ausgelegt ist, die Störleistung des entspreizten Signals aus einem Vergleich von empfangenen Datensymbolen mit im Empfänger a-priori bekannten Symbolen und im Empfänger a-priori unbekannten, vom Datensymbol-Entscheider (DEC) entschiedenen Datensymbolen, zu bestimmen.

9. CDMA-Funkempfänger nach Anspruch 8,
   **dadurch gekennzeichnet,**

   - **daß** das Mittel (SINR-EST) zum Bestimmen der Störleistung vom Empfänger (RAKE, MRC) detektierte Symbole entgegennimmt.

10. CDMA-Funkempfänger nach Anspruch 8,
    **dadurch gekennzeichnet,**

- **daß** der Empfänger ein RAKE-Empfänger (RAKE, MRC) mit einer Mehrzahl von RAKE-Fingern (R1,.., RN$_{Finger}$) und einem Combiner (MRC) ist, wobei die Ausgänge der RAKE-Finger mit Eingängen des Combiners verbunden sind, und
- **daß** das Mittel (SINR-EST) zum Bestimmen der Störleistung an den Ausgängen der RAKE-Finger bereitstehende empfangene Symbole entgegennimmt.

**Claims**

1. Method for determining the interference power in a CDMA radio receiver, with the following step being carried out after the despreading of a received signal:

    - determination of the interference power (P$_{ISCP}$) of the despread signal from a comparison of received symbols ($x_{k,j}$; $r_k$) with symbols (p$_{Pilot, k}$) which are known a-priori to the receiver and with received and decided data symbols (p$_{Data2,k}$) which are not known a-priori to the receiver.

2. Method according to Claim 1,
   **characterized**

    - **in that** the interference power is determined in the signal path downstream from the receiver (RAKE, MRC), in particular a RAKE receiver.

3. Method according to Claim 1,
   **characterized**

    - **in that** the receiver is a RAKE receiver (RAKE, MRC) with two or more RAKE fingers (R1,..,RN$_{Finger}$) and a combiner (MRC) downstream from the RAKE fingers, and
    - **in that** the interference power is determined by measuring the individual path interference powers (P$_{ISCP,j}$) of each RAKE finger (R1,..,RN$_{Finger}$) before the combiner (MRC) and by calculating the interference power (P$_{ISCP}$) from the measured path interference powers.

4. Method according to one of the preceding claims,
   **characterized**

    - **in that** the power of the received symbols which are known a-priori and the power of the received decided data symbols which are not known a-priori are determined, and
    - **in that** the interference power is calculated taking into account these two determined powers.

5. Method according to one of the preceding claims,
   **characterized**

    - **in that** the symbols which are known a-priori are the pilot symbols and the symbols which are not known a-priori are the payload data symbols for an individual physical channel, in particular the dedicated DPCH channel in accordance with the UMTS Standard.

6. Method according to Claim 5,
   **characterized**

    - **in that** in addition to the symbols which are known a-priori and the symbols which are not known a-priori of the individual physical channel symbols which are known a-priori and/or symbols which are not known a-priori for one or more further physical channels, in particular a common pilot channel, are used for determining the interference power.

7. Method according to one of the preceding claims,
   **characterized**

    - **in that** the determined interference power is used for channel-specific control of the signal-to-noise ratio on the downlink path.

8. CDMA radio receiver for receiving a signal of spread-coded symbols which are transmitted via a transmission channel, having

- a unit (C) for despreading the received signal,
- a channel estimator (KE) for determining the channel parameters for the transmission channel,
- a receiver (RAKE, MRC),
- a data symbol decision maker (DEC) which is connected to one output of the receiver (RAKE, MRC), and
- a means (SINR-EST) for determining the interference power of the received, despread signal, to which channel parameters which are determined by the channel estimator (KE) and data symbols which are decided by the data symbol decision maker (DEC) are supplied, and in which
- the means (SINR-EST) for determining the interference power is designed to determine the interference power of the despread signal from a comparison of received data symbols with symbols which are known a-priori in the receiver and data symbols which are not known a-priori in the receiver and are decided by the data symbol decision maker (DEC).

9. CDMA radio receiver according to Claim 8,
**characterized**

- **in that** the means (SINR-EST) for determining the interference power by the receiver (RAKE, MRC) receives detected symbols.

10. CDMA radio receiver according to Claim 8,
**characterized**

- **in that** the receiver is a RAKE receiver (RAKE, MRC) with two or more RAKE fingers (R1,..,RN$_{Finger}$) and a combiner (MRC), with the outputs of the RAKE fingers being connected to inputs of the combiner, and
- **in that** the means (SINR-EST) for determining the interference power receives received symbols which are produced at the outputs of the RAKE fingers.


**Revendications**

1. Procédé pour la détermination de la puissance parasite dans un récepteur radio CDMA, dans lequel on réalise après le dés-étalement d'un signal reçu l'étape de détermination de la puissance parasite (P$_{ISCP}$) du signal dés-étalé à partir d'une comparaison entre des symboles reçus (x$_{k,j}$ ; r$_k$), des symboles (p$_{pilot,k}$) connus a priori du récepteur et des symboles de données (p$_{Data2,k}$) inconnus a priori du récepteur, reçus et estimés.

2. Procédé selon la revendication 1,
**caractérisé par le fait qu'**on détermine la puissance parasite dans la voie de signal derrière le récepteur (RAKE, MRC), notamment derrière le récepteur RAKE.

3. Procédé selon la revendication 1,
**caractérisé par le fait que**

- le récepteur est un récepteur RAKE (RAKE, MRC) ayant une multiplicité de doigts RAKE (R1, ..., RN$_{Finger}$) et un combinateur (MRC) branché du côté aval des doigts RAKE, et
- on détermine la puissance parasite en mesurant les puissances parasites de voie (P$_{ISCP,j}$) individuelles de chaque doigt RAKE (R1, ..., RN$_{Finger}$) avant le combinateur (MRC) et en calculant la puissance parasite (P$_{ISCP}$) à partir des puissances parasites de voie mesurées.

4. Procédé selon l'une des revendications précédentes,
**caractérisé par le fait que**

- on détermine la puissance des symboles reçus et connus a priori et la puissance des symboles de données reçus, inconnus a priori et estimés, et
- on calcule la puissance parasite en tenant compte de ces deux puissances déterminées.

5. Procédé selon l'une des revendications précédentes,

**caractérisé par le fait que** les symboles connus a priori sont les symboles pilotes et les symboles inconnus a priori sont les symboles de données utiles d'un canal physique individuel, notamment du canal DPCH spécifique selon le standard UMTS.

6. Procédé selon la revendication 5,
**caractérisé par le fait que**, en plus des symboles connus a priori et des symboles inconnus a priori du canal physique individuel, on exploite pour la détermination de la puissance parasite des symboles connus a priori et/ou des symboles inconnus a priori d'un ou plusieurs autres canaux physiques, notamment d'un canal pilote commun.

7. Procédé selon l'une des revendications précédentes,
**caractérisé par le fait qu'**on utilise la puissance parasite déterminée pour la régulation, propre au canal, du rapport signal / bruit sur la voie descendante.

8. Récepteur radio CDMA pour la réception d'un signal de symboles codés par étalement et transmis via un canal de transmission, comportant

- une unité (C) pour le dés-étalement du signal reçu,
- un estimateur de canal (KE) pour la détermination de paramètres du canal de transmission,
- un récepteur (RAKE, MRC),
- un décideur de symboles de données (DEC) qui est en liaison avec une sortie du récepteur (RAKE, MRC), et
- un moyen (SINR-EST) pour la détermination de la puissance parasite du signal reçu et dés-étalé, lequel moyen reçoit des paramètres de canal déterminés par l'estimateur de canal (KE) et des symboles de données estimés par le décideur de symboles de données (DEC), et
- le moyen (SINR-EST) destiné à la détermination de la puissance parasite étant conçu pour déterminer la puissance parasite du signal dés-étalé à partir d'une comparaison entre des symboles de données reçus, des symboles connus a priori dans le récepteur et des symboles de données inconnus a priori dans le récepteur et estimés par le décideur de symboles de données (DEC).

9. Récepteur radio CDMA selon la revendication 8,
**caractérisé par le fait que** le moyen (SINR-EST) pour la détermination de la puissance parasite reçoit des symboles détectés par le récepteur (RAKE, MRC).

10. Récepteur radio CDMA selon la revendication 8,
**caractérisé par le fait que**

- le récepteur est un récepteur RAKE (RAKE, MRC) ayant une multiplicité de doigts RAKE (R1, ..., $RN_{Finger}$) et un combinateur (MRC), les sorties des doigts RAKE étant reliées à des entrées du combinateur, et
- le moyen (SINR-EST) pour la détermination de la puissance parasite reçoit des symboles reçus fournis aux sorties des doigts RAKE.

i-1 · · ───────►|◄─────── Schlitz i ───────►|◄─ · · i + 1

Gemeins. Pilotkan.

dedizierter Kanal

| | | TFCI | Data 1 | TPC | Data 2 | Pilot |

DPCH

$$N_{Data\,2} + N_{Pilot}$$

# Fig. 1

Fig. 2

EP 1 358 717 B1